# EUROPEAN PATENT SPECIFICATION

(11) **EP 0 966 999 B1**
(45) Date of publication and mention of the grant of the patent: **26.05.2004**
(21) Application number: 99201817.6
(22) Date of filing: 08.06.1999
(51) Int. Cl.: B01D 25/26

(54) **Annular sealing element for filtering cartridges, filtering cartridge comprising such element and fuel filtering unit comprising such cartridge**
Ringförmiger Dichtungskörper für Filterpatronen, Filterpatrone mit einem solchen Element und Brennstoffiltereinheit mit einem solchen Element
Joint annulaire pour cartouches filtrantes, cartouche filtrante comprenant un tel élément et unité de filtration pour carburant comprenant un tel élément

(30) Priority: 10.06.1998 CO 3321598
(43) Date of publication of application: 29.12.1999
(73) Proprietor: Cutore, Gaetano, 00040 Montecompatri RM (IT)
(72) Inventor: Cutore, Gaetano, 00040 Montecompatri RM (IT)
(74) Representative: Steinfl, Alessandro

(56) References cited:
- EP-A- 0 532 237
- DE-C- 715 197
- FR-A- 1 324 407

## Description

The present invention relates to an annular sealing element for filtering cartridges, to a filtering cartridge comprising such element and to a fuel filtering unit comprising such cartridge. The filtering unit is particularly suitable to be used in concealable direct refueling systems for aircrafts, i.e. retractable in underground constructions when not in use or maintenance.

In the international application WO 94/00348 in the name of the same Applicant, an underground construction is described comprising a plurality of tanks and a moving delivery station shown both in a lowered rest position, where it is completely underground with just its upper face at a ground level, and in a raised operating position where said construction comes up to allow aircrafts to be refueled.

Fuel delivery to aircrafts needs a filtering stage at ground which provides as well a separating action, so that fuel molecules can not only be filtered from possible impurities but also be separated from water molecules. Said separation is indispensable as when temperature drops below 0°C, water particles turn into ice particles. Such ice particles have the undesired effect to flow into other filtering devices on board, clogging them up. Therefore, as fuel does not reach the engines properly, the aircraft tends to de-rate. Such undesired effect occurs mainly during take off or at very high altitudes.

It is not conceivable to provide a separating device which separates water from fuel directly on board, as the size of such filters is not compatible with that of the aircraft.

The prior art provides aircraft fuel filtering units presenting coalescing filtering cartridges and separating filtering cartridges, usually cylindrically shaped, placed inside a container.

The purpose of a coalescing filtering cartridge is that of filtering fuel from impurities and of grouping water particles, forming drops decanting to the bottom of the container.

However, the presence of said coalescing stage does not allow separation through coalescence of all the water from fuel, substantially for statistic reasons. As a matter of fact, some drops do not become so big as to weigh enough to decant, and are more subject to the entrainment speed of the fuel that in the meantime is pumped in the aircraft. The smaller are the drops, the bigger is the effect caused by entrainment compared to that caused by decantation.

For that reason, a second stage filtering cartridge called separating filtering cartridge is thus provided, made substantially like the coalescing filtering cartridge, and having substantially the same purpose.

In the coalescing filtering cartridge, fuel flows from the inside to the outside, while in the separating filtering cartridge, fuel flows from the outside to the inside. Said cartridges are made at the moment with an axially folded cellulose board. The effect obtained through said cartridges is enhanced by means of a layer of glass fiber placed externally to said cartridges.

The main problem of said prior art embodiment is due to the fact that it is impossible to bear the highest differential pressure, fixed by present rules, of 75 psi (5,25 kg/cm²) between the inlet and the outlet of the stage, and often crashing of the filter occurs, as it is not fit to bear differential pressures higher than 15 psi.

A possibility for overcoming the above mentioned problem could be that of using filtering cartridges of the type described in the Italian patent No. 952711 1 (corresponding to British patent n. 1 433 501), owned by the Applicant. Figure 1 shows a partially sectional perspective view of said prior art embodiment. In particular, there is a tube 105 having a plurality of openings 106, as well as a set of inner annular sealing elements 108, concentrically placed to the tube 105 and external thereto. A set of outer annular sealing elements 109 is also present, concentrically placed to the tube 105 and outside thereto and to the inner annular sealing elements 108, thus having a larger diameter than said inner annular sealing elements 108. A set of filtering baffle plates 107 is also present, annularly shaped and concentrically placed to the tube 105 and to the inner annular sealing elements 108 and to the outer annular sealing elements 109. The inner and outer annular sealing elements are identically shaped, except for the diameter, being formed by a main body having a substantially U-shaped cross section and an upper portion forming an externally concave curve and a lower straight portion. In the body, in correspondence with the bottom region of the U, and along the entire circular peripheral region of the annulus, through holes are placed, as to allow fuel to move from the inside of the cartridge to the outside and viceversa. Filtering baffle plates 107 are preferably made of cotton fibers compressed so as to reach cardboard-like thickness. Said baffle plates 107 are passed through, from the inside to the outside of the cartridge and viceversa, by fuel or water particles. Cotton compressed under the form of cardboards, shows a hollow spirally shaped fiber, slowing water particles in comparison with fuel particles. In particular, fuel particles, instead of sliding along the wall of the baffle plates 107, pass it through at a higher speed than water. On the other hand, water particles tend to slide along the wall of the baffle plates and are pushed by other water particles, so that coalescence occurs by surface tension, with the consequent formation of larger drops. Under pressure, the annular elements 108 and 109 tend to squash the one on the other and the filtering baffle plates tend to form chambers substantially of a triangular shape in cross section. The elastic deformation of the inner and outer annular elements is such as to cause a deformation in the peripheral edges of the filtering baffle plates, tightening the ones to the others. Therefore, the resistance to differential pressure that is in this way obtained, is definitely higher than the one shown before. As a matter of fact, what is obtained is a self compensation among the different sealing elements eliminating crashing of the filter, which occurs in filters having cellulose cardboard axially folded, caused by the progressive increase of differential pressure. The baffle plates made of filtering material, subject to opposed differential pressures, tend to adhere the one to the other with perfect compensation, drastically reducing the problems connected with crashing.

However, a first drawback of said prior art is that the filtering baffle plates 107 are not sufficiently protected on the outer side of the filtering cartridge, as their outer radial end areas are unprotected, for the fact that they are not covered by the outer annular sealing elements 109.

Furthermore, a second drawback came out during the assembling of the filtering cartridges: during the introduction from the top of the outer annular sealing elements 109, their centering in the right position turned out to be particularly difficult.

A last problem to be mentioned is caused by the fact that all the previously mentioned type of cartridges are often vertically placed while the tubes for the inflow of fuel to be filtered and the outflow of filtered fuel are horizontally placed. Such a vertical disposition turns out to be particularly unfavorable because the entrainment speed of the fuel from the coalescing filtering cartridge to the separating filtering cartridge is substantially horizontal and tends to give a slanting trajectory to water drops decanting to the bottom once they are outputted from the coalescing filtering cartridge, with strong chances that said drops, instead of decanting, will direct towards the separating filtering cartridge, thus reducing the efficiency of the filter.

The present invention overcomes said drawbacks of the prior art by providing an annular sealing element for filtering cartridges, having an inner and an outer diameter and characterized in that it comprises:
■ a central body, having an inner and an outer wall, substantially semicircular in cross section, showing a plurality of holes; and
■ two sets of lugs placed on respective edges of the central body, said lugs being equally spaced therebetween and such that the lugs of a first set are placed in a staggered way with respect to the lugs of a second set, wherein a separating region between lugs of the first set on a first edge corresponds to a lug of the second set on a second edge.

A second object of the present invention is that of providing a fuel filtering cartridge characterized in that it comprises:
- a tube having a plurality of openings, from which tube the fuel to be filtered flows or to which tube the filtered fuel flows;
- a set of inner annular sealing elements, placed the one adjacent to the other concentrically and externally to the tube;
- a set of outer annular sealing elements, placed the one adjacent to the other concentrically to the tube and externally to the tube and to the inner annular sealing elements; and
- a set of filtering baffle plates, annularly shaped, placed the one adjacent to the other concentrically to the tube and between the inner annular sealing elements and the outer annular sealing elements, having an inner diameter substantially corresponding to the inner diameter of said inner annular sealing elements and an outer diameter substantially corresponding to the outer diameter of said outer annular sealing elements,
- the arrangement being such that:

- the lugs of each annular sealing element are inserted in the separating regions between lugs of adjacent annular sealing elements; and
- the filtering baffle plates form chambers substantially triangularly shaped when observed in cross section, said filtering baffle plates being contacted in pairs along their alternatively outer and inner peripheral regions, said peripheral regions being tightened between two adjacent, respectively alternatively outer and inner annular sealing elements.

A further object of the present invention is that of providing a fuel filtering unit, in particular for use in concealable direct refueling systems for aircrafts, characterized in that it comprises:
- input means of the fuel to be filtered;
- output means of the filtered fuel;
- a first set of filtering cartridges, connected to said input means, for carrying out both fuel filtering and coalescence of water contained in the fuel;
- a second set of filtering cartridges, connected to said output means, for carrying out both fuel filtering and separation of water from fuel,
- the arrangement being such that the fuel is filtered by passing through the first set of filtering cartridges from their inside to their outside and successively the second set of filtering cartridges from their outside to their inside.

A process for the realization of an annular sealing element for filtering cartridges is further provided, characterized in that it comprises the steps of:
- providing a strip, comprising a central body;
- providing a plurality of holes on said central body;
- providing on said strip a first set of lugs, placed on a first longitudinal edge of said central body, and a second set of lugs, placed on an opposite second longitudinal edge of said central body, the lugs of said first set being placed in a staggered way with respect to the lugs of said second set, wherein a separating region between lugs of one set corresponds to a lug of the other set;
- bending said strip along two first longitudinal bending lines, placed nearby longitudinal outer edges of said lugs;
- bending said strip along two second longitudinal bending lines, placed inwardly with respect to said first longitudinal bending lines,
- bending said strip a long a middle line so that said strip is substantially semicircular shaped when seen in a cross-sectional view; and
- bending said strip in form of an annular element.

A first advantage of the present invention is that the peculiar shape of the annular sealing elements allows protection of the filtering baffle plates from the outside, thanks to the covering obtained through the outer annular sealing elements.

A second advantage is shown during the assembling of the filtering cartridge:
as a matter of fact, thanks to the presence of the lugs 4 it is possible to obtain a
perfect centering for each pair of filtering baffle plates and for each pair of annular
sealing elements. The outer annular sealing elements in particular, once they are
introduced from the top, are easy to center as they have lugs through which they
"wrap" the surface of the filtering baffle plate on which they are going to land.

A further advantage is due to the horizontal arrangement of the filtering cartridges. The horizontal arrangement is particularly useful, as the entrainment force due to the fuel, which in this case is to be thought of as vertically inflown from the bottom to the top, goes in the same direction as the gravity force, but in an opposite way, i.e. to the top. In this way, all the inconvenients of a vertical arrangement, where drops decanting to the bottom of the container might collide against the separating filtering cartridge, are solved. Furthermore, the horizontal arrangement of the cartridges turns out to be perfect for the use in concealable systems, which have a closing upper cover and elements all raising out of the ground once fuel delivery is needed. The horizontal arrangement of the cartridges eases their maintenance; the use of vertical cartridges would make their removal and replacement extremely difficult. If the filters were vertically placed, to have access to them, it would be necessary to remove the very huge and heavy upper cover, while this is not needed with horizontal cartridges, as the access spaces under the cover can be exploited, once this is lifted.

The present invention will be described herebelow according to a preferred embodiment thereof, given as a non-limiting example.

Reference will be made to the figures of the enclosed drawings, where:

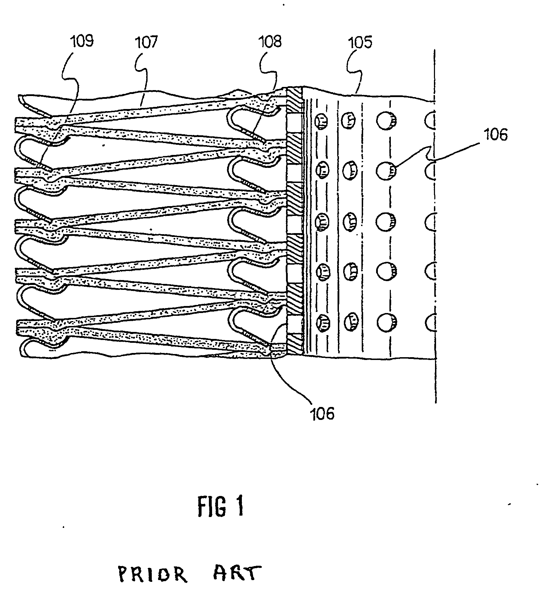

figure 1, already previously described, is a partial cross sectional view of a detail of a filtering cartridge of prior art;

figure 2 is a plan view of a strip with holes wherefrom annular sealing elements are to be obtained, according to present invention;

figure 3 is a cross sectional view of the strip of figure 2 after a first bending;

figure 4 is a cross sectional view of the strip of figure 2 after a second bending;

figure 5 is a perspective view of the strip of figure 2 after the two bendings;

figure 6 is a perspective view of the inner annular sealing element obtained from the strip of figure 5;

figure 7 is a perspective view of the outer annular sealing element obtained from the strip of figure 5;

figure 8 is a partial cross sectional view of a detail of one of the filtering cartridges according to the present invention;

figure 9 is a partial cross sectional view of a filtering cartridge, vertically seen, when introduced inside the fuel filtering unit according to the present invention ; and

figure 10 is a partially exploded perspective view of the fuel filtering unit according to the present invention.

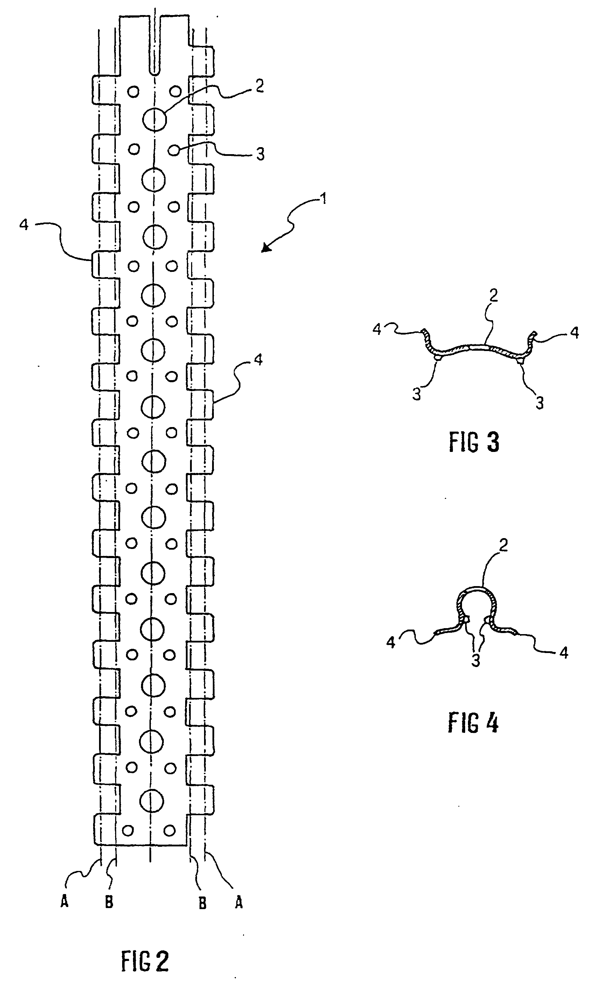

With reference to figure 2, a strip 1 is shown, preferably made of stainless steel, from which the inner and outer annular sealing elements according to the present invention are obtained. Along the longitudinal axis of the strip 1 a plurality of holes 2 has been obtained, preferably equally spaced therebetween. A plurality of projecting members 3 is also present, whose shape and functions will be better explained in the following figures 3 and 4. Two sets of lugs 4, each one of which shows a substantially quadrilateral shape when observed in a plan view, are furthermore placed along both edges of the strip. The lugs 4 of one set are placed in a staggered way in comparison with the lugs of another set, so that a separating region between lugs of a first of said sets on a first edge corresponds to a lug of a second of said sets on a second edge. The size of the separating region between lugs is slightly bigger than the size of a lug. The two vertical dotted and dashed lines A and B show the lines along which the two subsequent bendings for the formation of the profile of the annular sealing elements will occur.

The successive figures 3 and 4 show cross sectional views of the strip in figure 2 respectively after the first and the second bending along respective longitudinal bending lines A and B of figure 2. In particular, two first longitudinal bending lines A are placed nearby longitudinal outer edges of lugs 4, and two second longitudinal bending lines B are placed inwardly with respect to the first longitudinal bending lines A, substantially adjacent to longitudinal edges of the central body. After said subsequent bendings and a further bending of the strip along a middle line, the strip assumes a substantially semicircular shape when observed in cross section, wherein the lugs 4 assume a slightly curved shape and the projecting members 3 are opposed therebetween.

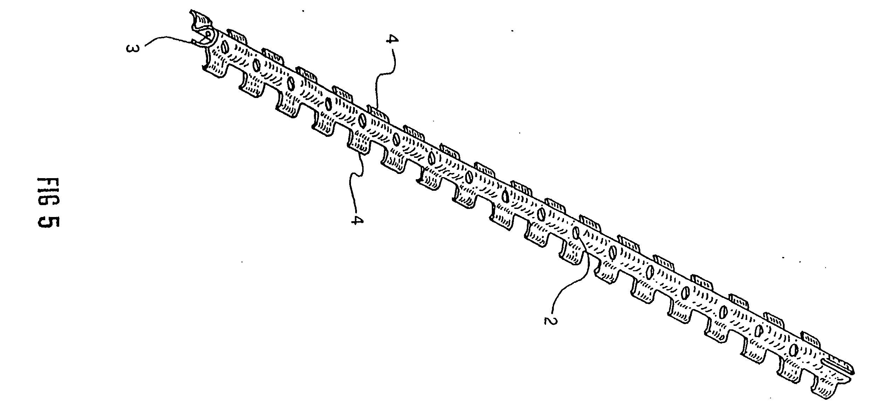

Figure 5 shows a perspective view of the strip of figure 2 after the two bending steps illustrated in figures 3 and 4. In particular, it is possible to notice more clearly the staggered arrangement of the lugs 4 placed along one edge in comparison with the lugs 4 placed along the other edge. Such a staggered arrangement will allow the stacking of the annular elements subsequently formed, so that the lugs of an annular element will be inserted into the separating regions between lugs of an adjacent annular element, and form a "loricated" configuration, as it will be better shown in the following figures.

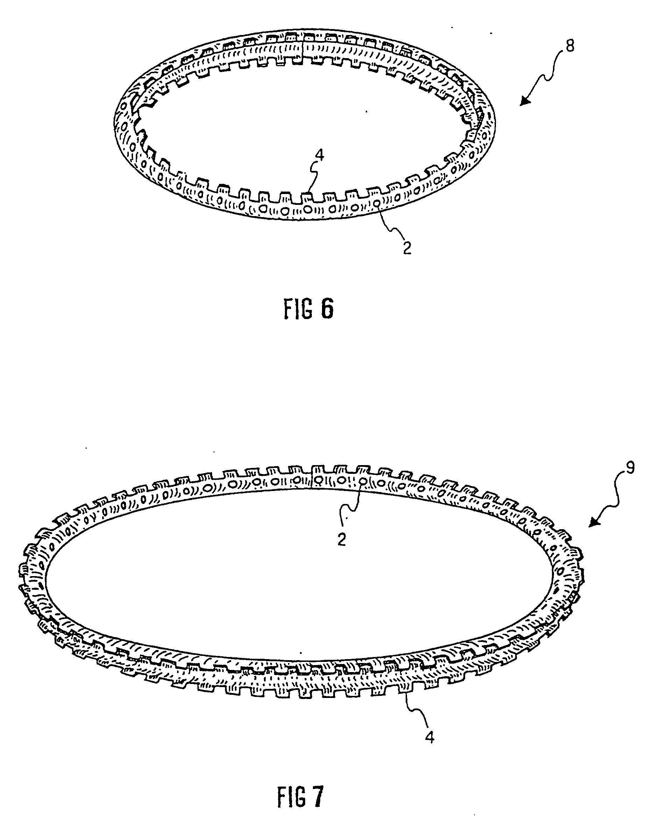

Figures 6 and 7 show two different shapes of the annular sealing elements according to the present invention.

In figure 6 an annular sealing element 8 is shown, obtained through the bending of the strip in figure 5 in such a way that the central body of the annular element, having a substantially semicircular shape when observed in cross section and showing a plurality of holes 2, is oriented as to present said holes 2 facing the outer side of the annular sealing element (i.e. placed along the outer diameter of the annular sealing element) and the lugs 4 facing the inner side (i.e. placed along the inner diameter of the annular sealing element). In figure 7 an annular sealing element 9 is shown, obtained through the bending of the strip in figure 5 in such a way that the central body of the annular element, having a substantially semicircular shape when observed in cross section and a plurality of holes 2 all along, is oriented as to present said holes 2 facing the inner side of the annular sealing element (i.e. placed along the inner diameter of the annular sealing element) and the lugs 4 facing the outer side (i.e. placed along the outer diameter of the annular sealing element).

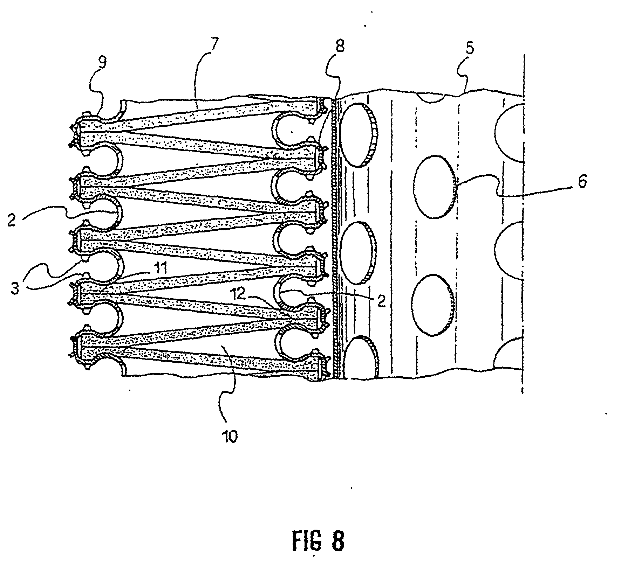

Figure 8 shows a partial cross sectional view of a filtering cartridge, shown vertically disposed for an easier representation.

The filtering cartridge, cylindrically shaped, is such as to include:
- a tube 5 having a plurality of openings 6, from which tube the fuel to be filtered flows or to which tube the filtered fuel flows;
- a set of inner annular sealing elements 8 according to what already described with reference to previous figure 6, placed the one on the other concentrically and externally to the tube 5;
- a set of outer annular sealing elements 9 according to what already described with reference to previous figure 7, placed the one on the other concentrically to the tube 5 and externally to the same tube and to the inner annular sealing elements 8; and
- a set of filtering baffle plates 7, annularly shaped, placed the one on the other concentrically to the tube 5 and between the inner annular sealing elements 8 and the outer annular sealing elements 9, and having an inner diameter substantially corresponding to the inner diameter of said inner annular sealing elements 8 and an outer diameter substantially corresponding to the outer diameter of said outer annular sealing elements 9.

The openings 6 are used to allow the flow of the filtered fuel to the inside of the tube 5, in case of separating filtering cartridge, or to allow the flow of the fuel to be filtered from the inside of the tube 5 to the filtering baffle plates 7, in case of coalescing filtering cartridge, passing in both cases through the holes 2 made in the annular sealing elements 8 and 9. The axial opposition between the pairs of the projecting members 3 is such as to allow said projecting members to limit the squashing under pressure of the annular sealing elements 8,9.

The assembly of a coalescing and/or separating filtering cartridge of the type up to now described is easy: it starts with the introduction of a filtering baffle plate 7, followed by the introduction of an inner or outer annular sealing element, then by a further filtering baffle plate and then again by the introduction of an annular sealing element different from the one previously introduced, then by the introduction of another filtering baffle plate and so on. The arrangement of the filtering cartridge is such that the lugs 4 of each annular sealing element 8 or 9 are introduced in the separating regions between the lugs of vertically adjacent annular sealing elements, so as to form a loricated configuration. The loricated cylindrical surface further allows the protection from mechanical stresses of the outer and inner surfaces of the filtering cartridge during transportation and installation.

The filtering baffle plates 7 form chambers 10 substantially triangularly shaped when observed in cross section. The filtering baffle plates 7 are such as to be superposed in pairs along alternatively outer and inner peripheral regions 11, 12. Said peripheral regions 11,12 are tightened between two adjacent, respectively alternatively outer and inner annular sealing elements. The particular cross sectional shape of the annular sealing elements gives to the cartridges a strong resilience against axially directed compression forces. Said forces, besides squashing the annulus, assure anyway a tight sealing of the joint between the baffle plates. The coupling under axial pressure of the annular sealing elements according to the present invention causes extremely high specific pressures in correspondence with the sealing lines, able to exceed differential operating pressures of more than 7 kg/cm².

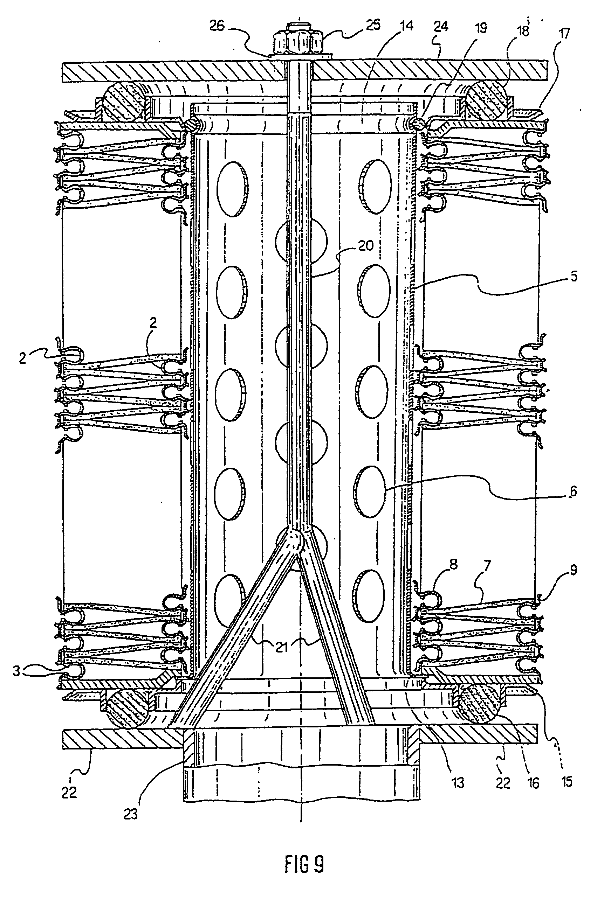

Reference will be now made to figure 9, which shows a partial cross sectional view of a filtering cartridge when introduced inside the fuel filtering unit. The cartridge, to be thought as horizontally placed inside said filtering unit, is herewith represented in a vertical position for an easier representation.

The shape of the filtering cartridge is the one described with reference to previous figure 8. A tube 5 is therefore present, comprising a plurality of openings 6, externally to which the annular sealing elements 8,9 and the filtering baffle plates 7 are placed, herewith partially represented, but to be thought as present all along the entire filtering cartridge. The tube 5 is such as to present a lower projecting circular region 13 and an upper annular grove 14.

The present figure 9 allows the understanding in a more detailed manner both of the way according to which the filtering cartridge is made and of the way according to which said filtering cartridge is introduced inside the fuel filtering unit. The filtering cartridge is made in such a way as to present a lower plate 15, annularly shaped, placed around tube 5 next to the projecting region 13, and comprising an O-ring gasket 16. Over said plate 15 various annular sealing elements 8,9 are then placed together with filtering baffle plates 7. Said elements are covered on top by an upper plate 17 identically shaped as the lower plate 15, having as well an O-ring gasket 18. The upper plate 17 is kept in its position by a resilient ring 19, placed along the circumference of the annular grove 14. The aim of said ring is that of blocking the pressed annular sealing elements, avoiding the extraction of the cartridge. In this manner, the optimal assembling pressures of the filtering cartridge are obtained. A preferred embodiment of the upper and lower plates 15, 17 provides that they are made through welding of an upper member on a lower member, so as to allow the use of gaskets 16, 18 that do not need gluing.

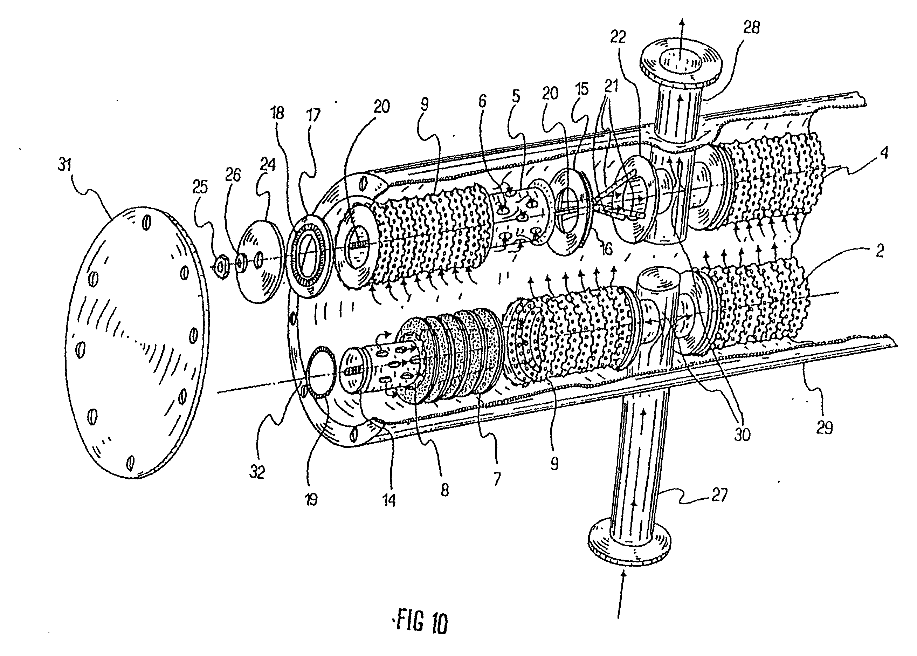

The introduction of the above described cartridge inside the fuel filtering unit will be better clarified in the description of the following figure 10. However, in the present figure 9 an upper tie rod 20 is shown, branching out in three lower tie rods 21 (only two of which are shown in the cross section of the figure), being distanced 120° therebetween. The three tie rods 21 are welded to a flange 22 obtained on a connecting duct 23 which is part of the fuel filtering unit where the cartridge will be introduced. From said connecting duct 23, fuel is directed to the tube 5, or to said connecting duct fuel coming from the tube 5 already filtered is directed. The lower three tie rods 21 allow the correct centering of the filtering cartridge during its introduction inside the fuel filtering unit according to the present invention. The introduction ends when the gasket 16 contacts the flange 22. Successively, an upper cover 24, circularly shaped and hollow in correspondence of the upper tie rod 20, is placed over the plate 17 and successively tightened through a blocking nut 25 and a washer 26. For that aim, the upper tie rod 20 has to be threaded at its end region corresponding to the region of introduction of the nut 25.

Reference will be now made to figure 10, which shows a partially exploded perspective view of the fuel filtering unit according to the present invention. A preferred embodiment of such fuel filtering unit provides its presence in the above mentioned concealable direct refueling systems for aircrafts.

A tube 27 for the inflow of fuel to be filtered and a tube 28 for the outflow of the filtered fuel are shown, connected to a cylindrically shaped container 29. Inside said container 29 are horizontally placed two first (coalescing) stage filtering cartridges connected to tube 27, and two second (separating) stage filtering cartridges connected to the tube 28 and placed over the first stage filtering cartridges. The fuel to be filtered and separated from water flows to the inside of the fuel filtering unit through the inflow tube 27, passes through the first stage filtering cartridges, exits from the outer annular sealing elements 9 of said first stage cartridges, passes through the outer annular sealing elements 9 of the second stage filtering cartridges, undergoing a successive filtering/separation action, and is outputted from the fuel filtering unit through the outflow tube 28.

The coalescing filtering cartridges are represented, in the preferred embodiment of the figure, identical to the separating filtering cartridges. It is however possible to make the separating cartridges differently sized from the coalescing cartridges. The container is so dimensioned that the section of the cartridges can allow the entrainment speed of the fuel (ascending speed) to be lower then the spontaneous decantation speed of water drops.

The left side cartridges are represented in an exploded manner, so as to allow a clearer sight over the way they are made. Therefore, it is possible to sight (represented from the left side to the right side on the second stage filtering cartridge but obviously present in all the filtering cartridges of the figure) the blocking nut 25, the washer 26, the upper cover 24, the tie rod 20, the outer annular sealing elements 9, the tube 5 with the openings 6, the lower plate 15, the tie rods 21 and the flange 22. Said flange 22 is welded over a T-shaped element 30, integral with the outflow tube 28 and the inflow tube 27. In the first stage filtering cartridge, but obviously present in all the filtering cartridges of the figure the ring 19, the annular grove 14 housing the same, the inner annular sealing elements 8 and the filtering baffle plates 7 are furthermore present.

The container 29 is covered and accessed through a cover 31, made integral to the container 29 by a flange 32 and by fixing means of the cover 31 to the flange 32. The flange 32 is annularly shaped, radially extending inside the container 29. Such an inner extension of the flange 32 is first of all advantageous to optimize the space occupied by the whole container 29 inside the concealable system; a second advantage is then given by the fact that said flange 32 blocks, during the replacement of the cartridges, possible fuel residual, that could otherwise pour out during maintenance.

Figure 10 gives a general outlook only of the manner in which filtering cartridges are arranged. Therefore, many auxiliary elements can be present, such as, for example, a sump pit for water separated from fuel. The water gathered in such a way, will be successively expelled through an automatic outlet, such as a float, which, when a certain level of the separated water is reached, allows its outflow.

Furthermore, the horizontal arrangement of the cartridges inside container 29 creates a "pneumatic plenum chamber" effect. The air, which is present inside the container and inside the cartridges before the fuel is introduced, will be forced to follow the direction of said fuel, when introduced, and go outside. As the level inside the filter is lower than the level of the outflow tube 28, there will then be an air mass that will not be able to go out during inflow/outflow of the fuel. When the pressure increases, said air mass will be compressed against the upper wall of the tank, thus causing a cushioning effect against water hammers.

The present invention has been up to now described with reference to some of its forms of preferred embodiment, given as non-limiting example. Other embodiments can be provided, included within the scope of the following claims.

## Claims

1. An annular sealing element for filtering cartridges, having an inner and an outer diameter and **characterized in that** it comprises:
- a central body, having an inner and an outer wall, substantially semicircular in cross section, showing a plurality of holes (2); and
- two sets of lugs (4) placed on respective edges of the central body, said lugs (4) being equally spaced therebetween and such that lugs of a first set are placed in a staggered way with respect to lugs of a second set, wherein a separating region between lugs of the first set on a first edge corresponds to a lug of the second set on a second edge.

2. The annular sealing element according to claim 1, **characterized in that** the central body is oriented in such a way that said holes (2) are placed along the inner diameter and said lugs (4) are placed along the outer diameter.

3. The annular sealing element according to claim 1, **characterized in that** the central body is oriented in such a way that said holes (2) are placed along the outer diameter and said lugs (4) are placed along the inner diameter.

4. The annular sealing element according to any of the previous claims, **characterized in that** it comprises a plurality of pairs of projecting members (3), placed along the inner wall of said central body, the projecting members of each pair being opposed therebetween, for limiting squashing under pressure of the annular sealing element.

5. A process for the realization of an annular sealing element for filtering cartridges, **characterized in that** it comprises the steps of
- providing a strip (1), comprising a central body;
- providing a plurality of holes (2) on said central body;
- providing on said strip (1) a first set of lugs (4), placed on a first longitudinal edge of said central body, and a second set of lugs (4), placed on an opposite second longitudinal edge of said central body, the lugs (4) of said first set being placed in a staggered way with respect to the lugs (4) of said second set, wherein a separating region between lugs of one set corresponds to a lug of the other set;
- bending said strip (1) along two first longitudinal bending lines (A), placed nearby longitudinal outer edges of said lugs (4);
- bending said strip (1) along two second longitudinal bending lines (B), placed inwardly with respect to said first longitudinal bending lines (A),
- bending said strip (1) along a middle line so that said strip (1) is substantially semicircularly shaped when seen in a cross-sectional view; and
- bending said strip (1) in form of an annular element (8;9).

6. The process according to claim 5, **characterized in that** said step of bending said strip (1) in form of an annular element is such that said central body is oriented in such a way that said holes (2) are placed along the inner diameter and said lugs (4) are placed along the outer diameter.

7. The process according to claim 5, **characterized in that** said step of bending said strip (1) in form of an annular element is such that said central body is oriented in such a way that said holes (2) are placed along the outer diameter and said lugs (4) are placed along the inner diameter.

8. The process according to any of the claims from 5 to 7, **characterized in that** it further comprises the step of providing a plurality of pairs of projecting members (3) along the inner wall of said central body, the projecting members of each pair being opposed therebetween after said step of bending said strip (1) in form of an annular element.

9. A fuel filtering cartridge **characterized in that** it comprises:
- a tube (5) having a plurality of openings (6), from which tube the fuel to be filtered flows or to which tube the filtered fuel flows;
- a set of inner annular sealing elements (8) according to claim 2 or to claim 4 when depending on claim 2, placed the one adjacent to the other concentrically and externally to the tube (5);
- a set of outer annular sealing elements (9) according to claim 3 or to claim 4 when depending on claim 3, placed the one adjacent to the other concentrically to the tube (5) and externally to the tube (5) and to the inner annular sealing elements (8); and
- a set of filtering baffle plates (7), annularly shaped, placed the one adjacent to the other concentrically to the tube (5) and between the inner annular sealing elements (8) and the outer annular sealing elements (9), having an inner diameter substantially corresponding to the inner diameter of said inner annular sealing elements (8) and an outer diameter substantially corresponding to the outer diameter of said outer annular sealing elements (9),
the arrangement being such that:
- the lugs (4) of each annular sealing element (8;9) are inserted in the separating regions between lugs of adjacent annular sealing elements; and
- the filtering baffle plates (7) form chambers (10) substantially triangularly shaped when observed in cross section, said filtering baffle plates (7) being contacted in pairs along their alternatively outer (11) and inner (12) peripheral regions, said peripheral regions (11; 12) being tightened between two adjacent, respectively alternatively outer and inner annular sealing elements.

10. A fuel filtering unit, in particular for use in concealable direct refueling systems for aircrafts, **characterized in that** it comprises ;
- input means (27,30) of the fuel to be filtered;
- output means (28,30) of the filtered fuel;
- a first set of filtering cartridges according to claim 9, connected to said input means (27,30), for carrying out both fuel filtering and coalescence of water contained in the fuel;
- a second set of filtering cartridges according to claim 9, connected to said output means (28,30), for carrying out both fuel filtering and separation of water from fuel, the arrangement being such that the fuel is filtered by passing through the first set of filtering cartridges from their inside to their outside and successively the second set of filtering cartridges from their outside to their inside.

11. The fuel filtering unit according to claim 10, **characterized in that** said first and second set of filtering cartridges are horizontally placed.

12. The fuel filtering unit according to claim 10 or claim 11, **characterized in that** it further comprises:
- a container (29) for containing said first and second set of filtering cartridges; and
- a cover (31) integral to said container (29) by a flange (32) and by fixing means of said cover (31) to said flange (32),
wherein said flange (32) extends inside the container (29).

## Patentansprüche

1. Ringförmiges Dichtelement für Filterpatronen, mit einem inneren und einem äußeren Umfang und **dadurch gekennzeichnet, dass** es aufweist:
- einen Zentralkörper, der eine innere und eine äußere Wand hat, im Querschnitt im Wesentlichen halbkreisförmig ist und eine Vielzahl von Löchern (2) aufweist; und
- zwei Sätze von Nasen (4), die an Rändern des Zentralkörpers platziert sind,
wobei die Nasen (4) gleichabständig an denselben und so angeordnet sind, dass die Nasen eines ersten Satzes versetzt in Bezug auf die Nasen eines zweiten Satzes platziert sind, wobei ein Trenngebiet zwischen den Nasen des ersten Satzes an einem ersten Rand einer Nase des zweiten Satzes an einem zweiten Rand entspricht.

2. Ringförmiges Dichtelement nach Anspruch 1, **dadurch gekennzeichnet, dass** der Zentralkörper so ausgerichtet ist, dass die Löcher (2) längs des inneren Umfangs platziert sind und dass die Nasen (4) längs des äußeren Umfangs platziert sind.

3. Ringförmiges Dichtelement nach Anspruch 1, **dadurch gekennzeichnet, dass** der Zentralkörper so ausgerichtet ist, dass die Löcher (2) längs des äußeren Umfangs platziert sind und dass die Nasen (4) längs des inneren Umfangs platziert sind.

4. Ringförmiges Dichtelement nach einem der vorhergehenden Ansprüche, **dadurch gekennzeichnet, dass** es eine Vielzahl von Paaren vorstehender Teile (3) aufweist, die längs der inneren Wand des Zentralkörpers platziert sind, wobei die vorstehenden Teile jedes Paares an derselben einander gegenüberliegen, um ein Zusammendrücken des ringförmigen Dichtelements unter Druck zu begrenzen.

5. Verfahren zur Realisierung eines ringförmigen Dichtelements für Filterpatronen, **dadurch gekennzeichnet, dass** es die Schritte umfasst:
- Bereitstellen eines Streifens (1 ), der einen Zentralkörper bildet;
- Vorsehen einer Vielzahl von Löchern (2) in dem Zentralkörper;
- Vorsehen eines ersten Satzes von Nasen (4) an dem Streifen (1), die an einem ersten Längsrand des Zentralkörpers platziert sind, und eines zweiten Satzes von Nasen (4), die an einem entgegengesetzten zweiten Längsrand des Zentralkörpers platziert sind, wobei die Nasen (4) des ersten Satzes versetzt in Bezug auf die Nasen (4) des zweiten Satzes platziert sind und wobei ein Trenngebiet zwischen den Nasen des einen Satzes einer Nase des anderen Satzes entspricht;
- Biegen des Streifens (1) längs zwei ersten Längsbiegelinien (A), die nahe äuβeren Längsrändern der Nasen (4) platziert sind;
- Biegen des Streifens (1) längs zwei zweiten Längsbiegelinien (B), die in Bezug auf die ersten Längsbiegelinien (A) einwärts platziert sind,
- Biegen des Streifens (1) längs einer Mittellinie, so dass der Streifen (1) im Wesentlichen halbkreisförmig ist, wenn er in einer Querschnittansicht betrachtet wird; und
- Biegen des Streifens (1) in die Form eines ringförmigen Elements (8; 9).

6. Verfahren nach Anspruch 5, **dadurch gekennzeichnet, dass** der Schritt des Biegens des Streifens (1) in die Form eines ringförmigen Elements so ausgeführt wird, dass der Zentralkörper derart ausgerichtet wird, dass die Löcher (2) längs des inneren Umfangs platziert werden und dass die Nasen (4) längs des äußeren Umfangs platziert werden.

7. Verfahren nach Anspruch 5, **dadurch gekennzeichnet, dass** der Schritt des Biegens des Streifens (1) in die Form eines ringförmigen Elements so ausgeführt wird, dass der Zentralkörper derart ausgerichtet wird, dass die Löcher (2) längs des äußeren Umfangs platziert werden und dass die Nasen (4) längs des inneren Umfangs platziert werden.

8. Verfahren nach einem der Ansprüche 5 bis 7, **dadurch gekennzeichnet, dass** es weiter den Schritt beinhaltet Vorsehen einer Vielzahl von Paaren vorstehender Teile (3) längs der inneren Wand des Zentralkörpers, wobei die vorstehenden Teile jedes Paares nach dem Schritt des Biegens des Streifens (1) in die Form eines ringförmigen Elements an der inneren Wand einander gegenüber liegen.

9. Brennstofffilterpatrone, **dadurch gekennzeichnet, dass** sie umfasst:
- ein Rohr (5), das eine Vielzahl von Öffnungen (6) hat, wobei der zu filternde Brennstoff aus dem Rohr fließt oder der gefilterte Brennstoff zu dem Rohr fließt;
- einen Satz innerer ringförmiger Dichtelemente (8) nach Anspruch 2 oder nach Anspruch 4, wenn abhängig von Anspruch 2, die benachbart zu einander konzentrisch zu dem Rohr (5) und außerhalb des Rohres (5) platziert sind;
- einen Satz äußerer ringförmiger Dichtelemente (9) nach Anspruch 3 oder nach Anspruch 4, wenn abhängig von Anspruch 3, die benachbart zu einander konzentrisch zu dem Rohr (5) und außerhalb des Rohres (5) und der inneren ringförmigen Dichtelemente (8) platziert sind; und
- einen Satz Filterscheidewände (7), die ringförmig sind, benachbart zu einander konzentrisch zu dem Rohr (5) und zwischen den inneren ringförmigen Dichtelementen (8) und den äußeren ringförmigen Dichtelementen (9) platziert sind, einen inneren Durchmesser haben, der dem inneren Durchmesser der inneren ringförmigen Dichtelemente (8) im Wesentlichen entspricht, und einen äußeren Durchmesser, der dem äußeren Durchmesser der äußeren ringförmigen Dichtelemente (9) im Wesentlichen entspricht,
wobei die Anordnung so getroffen ist, dass:
- die Nasen (4) jedes ringförmigen Dichtelements (8; 9) in die Trenngebiete zwischen den Nasen von benachbarten ringförmigen Dichtelementen eingeführt sind; und
- die Filterscheidewände (7) Kammern (10) bilden, welche im Wesentlichen dreieckförmig sind, wenn sie im Querschnitt betrachtet werden, wobei die Filterscheidewände (7) in Paaren längs ihrer abwechselnd äußeren (11) und inneren (12) Umfangsgebiete in Kontakt sind und wobei die Umfangsgebiete (11; 12) zwischen zwei benachbarten, abwechselnd äußeren und inneren ringförmigen Dichtelementen eingespannt sind.

10. Brennstofffiltereinheit, insbesondere zur Verwendung in versenkbaren Direktbetankungssystemen für Flugzeuge, **dadurch gekennzeichnet, dass** sie umfasst:
- eine Eingangseinrichtung (27, 30) für den zu filternden Brennstoff;
- eine Ausgangseinrichtung (28, 30) für den gefilterten Brennstoff;
- einen ersten Satz Filterpatronen nach Anspruch 9, die mit der Eingangseinrichtung (27, 30) verbunden sind, zum Bewirken sowohl der Brennstofffilterung als auch des Koaleszierens von in dem Brennstoff enthaltenen Wasser;
- einen zweiten Satz Filterpatronen nach Anspruch 9, die mit der Ausgangseinrichtung (28, 30) verbunden sind zum Bewirken sowohl der Brennstofffilterung als auch der Abscheidung von Wasser aus dem Brennstoff, wobei die Anordnung so getroffen ist, dass der Brennstoff gefiltert wird durch Hindurchleiten durch den ersten Satz Filterpatronen von deren Innenseite zu deren Außenseite und nach und nach durch den zweiten Satz Filterpatronen von deren Außenseite zu deren Innenseite.

11. Brennstofffiltereinheit nach Anspruch 10, **dadurch gekennzeichnet, dass** der erste und der zweite Satz Filterpatronen horizontal platziert sind.

12. Brennstofffiltereinheit nach Anspruch 10 oder Anspruch 11, **dadurch gekennzeichnet, dass** sie weiter umfasst:
- einen Behälter (29) zum Aufnehmen des ersten und des zweiten Satzes Filterpatronen; und
- einen Deckel (31), der fest mit dem Behälter (29) verbunden wird durch einen Flansch (32) und durch Mittel zum Befestigen des Deckels (31) an dem Flansch (32),
wobei sich der Flansch (32) innerhalb des Behälters (29) erstreckt.

## Revendications

1. Elément d'étanchéité annulaire pour cartouches filtrantes, ayant un diamètre intérieur et un diamètre extérieur, et **caractérisé en ce qu'**il comporte :
- un corps central, ayant une paroi intérieure et une paroi extérieure, sensiblement semi-circulaire en coupe transversale, présentant une pluralité de trous (2), et
- deux ensembles de pattes (4) placés sur des bords respectifs du corps central, lesdites pattes (4) étant espacées de manière égale entre celles-ci, et de telle sorte que les pattes d'un premier ensemble sont placés de manière étagée par rapport aux pattes d'un deuxième ensemble, dans lequel une zone de séparation entre les pattes du premier ensemble situé sur un premier bord correspond à une patte du second ensemble situé sur un second bord.

2. Elément d'étanchéité annulaire selon la revendication 1, **caractérisé en ce que** le corps central est orienté d'une manière telle que lesdits trous (2) sont placés le long du diamètre intérieur, et lesdites pattes (4) sont placées le long du diamètre extérieur.

3. Elément d'étanchéité annulaire selon la revendication 1, **caractérisé en ce que** le corps central est orienté d'une manière telle que lesdits trous (2) sont placés le long du diamètre extérieur, et lesdites pattes (4) sont placées le long du diamètre intérieur.

4. Elément d'étanchéité annulaire selon l'une quelconque des revendications précédentes, **caractérisé en ce qu'**il comporte une pluralité de paires d'éléments faisant saillie (3), placés le long de la paroi intérieure dudit corps central, les éléments faisant saillie de chaque paire étant opposés entre eux, pour limiter un écrasement sous pression de l'élément d'étanchéité annulaire.

5. Procédé pour réaliser un élément d'étanchéité annulaire pour cartouches filtrantes, **caractérisé en ce qu'**il comporte les étapes consistant à :
- fournir une bande (1), comportant un corps central,
- fournir une pluralité de trous (2) sur ledit corps central,
- fournir sur ladite bande (1) un premier ensemble de pattes (4), placées sur un premier bord longitudinal dudit corps central, et un second ensemble de pattes (4), placées sur un second bord longitudinal opposé dudit corps central, les pattes (4) dudit premier ensemble étant placées d'une manière étagée par rapport aux pattes (4) dudit second ensemble, une zone de séparation entre les pattes d'un premier ensemble correspondant à une patte de l'autre ensemble,
- incurver ladite bande (1) le long de deux premières lignes d'incurvation longitudinales (A), placées à proximité de bords longitudinaux extérieurs desdites pattes (4),
- incurver ladite bande (1) le long de deux secondes lignes d'incurvation longitudinales (B), placées vers l'intérieur audites premières lignes d'incurvation longitudinales (A),
- incurver ladite bande (1) le long d'une ligne médiane, de sorte que ladite bande (1) est sensiblement de forme semi-circulaire lorsqu'elle est vue en coupe transversale, et
- incurver ladite bande (1) selon la forme d'un élément annulaire (8 ; 9).

6. Procédé selon la revendication 5, **caractérisé en ce que** ladite étape consistant à incurver ladite bande (1) selon la forme d'un élément annulaire est telle que ledit corps central est orienté d'une manière telle que lesdits trous (2) sont placés le long du diamètre intérieur, et lesdites pattes (4) sont placées le long du diamètre extérieur.

7. Procédé selon la revendication 5, **caractérisé en ce que** ladite étape consistant à incurver ladite bande (1) selon une forme d'élément annulaire est telle que ledit corps central est orienté d'une manière telle que lesdits trous (2) sont placés le long du diamètre extérieur, et lesdites pattes (4) sont placées le long du diamètre intérieur.

8. Procédé selon l'une quelconque des revendications 5 à 7, **caractérisé en ce qu'**il comporte de plus l'étape consistant à fournir une pluralité de paires d'éléments faisant saillie (3) le long de la paroi intérieure dudit corps central, les éléments faisant saillie de chaque paire étant opposés entre eux après ladite première étape d'incurvation de ladite bande (1) selon une forme d'un élément annulaire.

9. Cartouche de filtrage de carburant, **caractérisée en ce qu'**elle comporte :
- un tube (5) ayant une pluralité d'ouvertures (6), tube à partir duquel le carburant devant être filtré s'écoule, ou tube vers lequel de carburant devant être filtré s'écoule,
- un ensemble d'éléments d'étanchéité annulaires intérieurs (8) selon la revendication 2 ou la revendication 4, lorsque dépendante de la revendication 2, placés les uns adjacents aux autres de manière concentrique et de manière externe par rapport au tube (5),
- un ensemble d'éléments d'étanchéité annulaires extérieurs (9) selon la revendication 3 ou selon la revendication 4, lorsque dépendante de la revendication 3, placés adjacents les uns aux autres de manière concentrique par rapport au tube (5), et de manière externe par rapport au tube (5) et aux éléments d'étanchéité annulaires intérieurs (8), et
- un ensemble de plaques formant écran de filtrage (7), mises en forme de manière annulaire, placées adjacentes les unes aux autres de manière concentrique par rapport au tube (5), et entre les éléments d'étanchéité annulaires intérieurs (8) et les éléments d'étanchéité annulaires extérieurs (9), ayant un diamètre intérieur correspondant sensiblement au diamètre intérieur desdits éléments d'étanchéité annulaires intérieurs (8), et un diamètre extérieur correspondant sensiblement au diamètre extérieur desdits éléments d'étanchéité annulaires extérieurs (9),
l'agencement étant de telle sorte que :
- les pattes (4) de chaque élément d'étanchéité annulaire (8 ; 9) sont insérées dans les zones de séparation entre des pattes d'éléments d'étanchéité annulaires adjacents, et
- les plaques formant écran de filtrage (7) forment des chambres (10) d'une forme sensiblement triangulaire lorsque vues en coupe transversale, lesdits plaques formant écran de filtrage (7) étant mises en contact par paires le long de leurs zones périphériques extérieure (11) et intérieure (12) de manière alternée, lesdites zones périphériques (11 ; 12) étant serrées entre deux éléments d'étanchéité annulaires extérieur et intérieur adjacents, respectivement de manière alternée.

10. Unité de filtrage de carburant, destinée à être utilisée en particulier dans des systèmes de ravitaillement en carburant direct pouvant être dissimulés destinés à des avions, **caractérisée en ce qu'**elle comporte :
- des moyens d'entrée (27, 30) du carburant devant être filtré,
- des moyens de sortie (28, 30) du fluide filtré,
- un premier ensemble de cartouches filtrantes selon la revendication 9, connectées auxdits moyens d'entrée (27, 30), pour effectuer un filtrage de carburant et une coalescence d'eau contenue dans le carburant,
- un second ensemble de cartouches filtrantes selon la revendication 9, connectées auxdits moyens de sortie (28, 30), pour effectuer un filtrage de carburant et une séparation d'eau à partir du carburant, l'agencement étant de telle sorte que le carburant est filtré en passant à travers le premier ensemble de cartouches filtrantes à partir de leur partie intérieure vers leur partie extérieure, et ensuite à travers le second ensemble de cartouches filtrantes à partir de leur partie extérieure vers leur partie intérieure.

11. Unité de filtrage de carburant selon la revendication 10, **caractérisée en ce que** lesdits premier et second ensembles de cartouches filtrantes sont placés horizontalement.

12. Unité de filtrage de carburant selon la revendication 10 ou 11, **caractérisée en ce qu'**elle comporte de plus :
- un conteneur (29) destiné à contenir lesdits premier et second ensembles de cartouches filtrantes, et
- un couvercle (31) en un seul bloc sur ledit conteneur (29) par l'intermédiaire d'un rebord (32) et par l'intermédiaire de moyens de fixation dudit couvercle (31) sur ledit rebord (32),
dans laquelle ledit rebord (32) s'étend à l'intérieur du conteneur (29).
